# EUROPÄISCHE PATENTSCHRIFT

(11) **EP 1 066 458 B1**
(45) Veröffentlichungstag und Bekanntmachung des Hinweises auf die Patenterteilung: **19.11.2003**
(21) Anmeldenummer: 99922052.8
(22) Anmeldetag: 22.03.1999
(51) Int. Cl.: F02D 41/30, F02D 37/02

(54) **VERFAHREN ZUM BETREIBEN EINER BRENNKRAFTMASCHINE**
METHOD OF OPERATION FOR AN INTERNAL COMBUSTION ENGINE
PROCEDE DE FONCTIONNEMENT D'UN MOTEUR A COMBUSTION INTERNE

(30) Priorität: 26.03.1998 DE 19813380
(43) Veröffentlichungstag der Anmeldung: 10.01.2001
(73) Patentinhaber: ROBERT BOSCH GMBH, 70442 Stuttgart (DE)
(72) Erfinder: ODER, Michael, D-75428 Illingen (DE)
(86) Internationale Anmeldenummer: DE9900808
(87) Internationale Veröffentlichungsnummer: WO99049196

(56) Entgegenhaltungen:
- EP-A- 0 826 880
- WO-A-98/09062
- US-A- 5 722 362
- PATENT ABSTRACTS OF JAPAN vol. 096, no. 011, 29. November 1996 (1996-11-29) & JP 08 189405 A (TOYOTA MOTOR CORP), 23. Juli 1996 (1996-07-23)

## Beschreibung

### Stand der Technik

Die Erfindung betrifft ein Verfahren zum Betreiben einer Brennkraftmaschine insbesondere eines Kraftfahrzeugs, nach dem Oberbegriff des Anspruchs 1 und nach dem Oberbegriff des Anspruchs 4. Des weiteren betrifft die Erfindung ein elektrisches Speichermedium für ein Steuergerät einer Brennkraftmaschine, ein Steuergerät für eine Brennkraftmaschine und eine Brennkraftmaschine insbesondere für ein Kraftfahrzeug. Derartige Verfahren sind aus der EP 826 880 A2 bekannt.

Bei Kraftfahrzeugen mit einer Benzineinspritzung in ein dem Brennraum vorgelagertes Ansaugrohr wird die Brennkraftmaschine im Leerlauf und bei Teillast mit einem stöchiometrischen oder mageren Luft-/Kraftstoffgemisch betrieben, um den Kraftstoffverbrauch und die Erzeugung von schadstoffhaltigen Abgasen zu verringern. Wünscht der Fahrer des Kraftfahrzeugs eine Beschleunigung, so wird die Brennkraftmaschine bei einer derartigen Vollast mit einem fetten Luft-/Kraftstoffgemisch betrieben, um das erforderliche Drehmoment für die Beschleunigung zu erzeugen. Die Steuerung und/oder Regelung einer derartigen Benzineinspritzung erfolgt über eine Drosselklappe, mit der die dem Brennraum zugeführte Luftmasse beeinflußt wird, sowie über ein im Ansaugrohr angeordnetes Einspritzventil, mit dem die in das Ansaugrohr eingespritzte Kraftstoffmasse beeinflußt wird. Das dem Brennraum auf diese Weise zugeführte Luft-/Kraftstoffgemisch wird von einer Zündkerze entzündet und der Kraftstoff wird verbrannt. Aus der Verbrennung des Kraftstoffs resultiert dann das von der Brennkraftmaschine erzeugte Drehmoment.

Insbesondere aufgrund der unterschiedlichen Betriebsarten ist es möglich, daß es bei dem Betrieb der Brennkraftmaschine zu einem sogenannten Ruckeln kommt.

Aufgabe der Erfindung ist es, ein Verfahren und eine Brennkraftmaschine insbesondere für ein Kraftfahrzeug zu schaffen, die möglichst wenig oder kein Ruckeln aufweisen.

Diese Aufgabe wird bei einem Verfahren der eingangs genannten Art erfindungsgemäß durch die Merkmale des kennzeichnenden Teils des Anspruchs 1 und durch die Merkmale des kennzeichnenden Teils des Anspruchs 4 gelöst. Bei einem elektrischen Speichermedium, einem Steuergerät und einer Brennkraftmaschine der eingangs genannten Art wird die Aufgabe entsprechend durch die Ansprüche 12, 13 und 14 gelöst.

Bei einem Übergang beispielsweise von einem mageren Luft-/Kraftstoffgemisch zu einem stöchiometrischen oder fetten Luft-/Kraftstoffgemisch wird zuerst die Drosselklappe der Brennkraftmaschine geschlossen, so daß weniger Luftmasse in den Brennraum gelangt. Aufgrund der Speicherwirkung des zwischen der Drosselklappe und dem Brennraum angeordneten Ansaugrohrs erfolgt die Verringerung der Luftmasse mit einer Zeitverzögerung. Dies hat zur Folge, dass etwa während dieser Zeitverzögerung nach dem Schließen der Drosselklappe zu viel Luftmasse aus dem Ansaugrohr in den Brennraum gelangt. Das nach dem Übergang in die zweite Betriebsart an sich erwünschte stöchiometrische oder fette Luft-/Kraftstoffgemisch ist dadurch gestört, was sich durch einen Momentenanstieg, also durch ein Ruckeln, bemerkbar machen würde.

Durch die erfindungsgemäße Spätverstellung des Zündzeitpunkts bzw. Zündwinkels wird der Wirkungsgrad der Verbrennung in dem Brennraum verschlechtert. Dies hat zur Folge, dass der an sich erfolgende Momentenanstieg verhindert oder zumindest vermindert wird.

Umgekehrt wird bei einem Übergang von einem stöchiometrischen oder fetten Luft-/Kraftstoffgemisch zu einem mageren Luft-/Kraftstoffgemisch die Drosselklappe zuerst geöffnet, so dass mehr Luftmasse in den Brennraum gelangt. Auch hier ist jedoch aufgrund des Ansaugrohrs eine Zeitverzögerung vorhanden, bis die für die zweite Betriebsart erforderliche, vermehrte Luftmasse in den Brennraum, gelangt. Während dieser Zeitverzögerung ist für die erste Betriebsart zu viel Luftmasse vorhanden, was sich in einem Momentenanstieg, also in einem Ruckeln bemerkbar machen würde.

Durch die erfindungsgemäße Spätverstellung des Zündzeitpunkts bzw. Zündwinkels wird der Wirkungsgrad der Verbrennung wieder verschlechtert, so dass das Ruckeln zumindest teilweise oder gar vollständig abgebaut wird.

Durch die Spätverstellung wird also erreicht, dass die Brennkraftmaschine bei einem Übergang zwischen den beiden Betriebsarten kein Ruckeln oder zumindest nahezu kein Ruckeln mehr aufweist. Die Laufruhe der Brennkraftmaschine und damit der Komfort für den Fahrer wird somit verbessert.

Dabei wird der Zündzeitpunkt bzw. der Zündwinkel bei einem Übergang derart nach spät verstellt, dass das von der Brennkraftmaschine erzeugte Drehmoment während des Übergangs etwa konstant bleibt.

Es wird also beispielsweise bei einem Übergang von einem mageren Luft-/Kraftstoffgemisch zu einem stöchiometrischen oder fetten Luft-/Kraftstoffgemisch der dabei an sich entstehende Momentenanstieg durch die erfindungsgemäße Spätverstellung gerade so ausgeglichen und kompensiert, dass keine oder nahezu keine Veränderung des von der Brennkraftmaschine erzeugten Drehmoments während des Übergangs erfolgt. Damit wird erreicht, dass während des Übergangs kein Ruckeln oder nahezu kein Ruckeln vorhanden ist.

Bei einer vorteilhaften Weiterbildung der Erfindung wird bei einem Übergang von der ersten Betriebsart in die zweite Betriebsart der Zündzeitpunkt bzw. der Zündwinkel nach dem Übergang nach spät verstellt.

Durch die bereits erwähnte Speicherwirkung des Ansaugrohrs ist unmittelbar nach dem Übergang zu dem stöchiometrischen oder fetten Luft-/Kraftstoffgemisch noch zu viel Luft in dem Brennraum vorhanden. Der daraus resultierende Momentenanstieg erfolgt somit unmittelbar nach dem Übergang in die zweite Betriebsart. Durch die nach dem Übergang einsetzende Spätverstellung des Zündzeitpunkts bzw. Zündwinkels wird erreicht, daß die Kompensation des Momentenanstiegs zur richtigen Zeit erfolgt, nämlich unmittelbar nachdem die Brennkraftmaschine in die zweite Betriebsart übergegangen ist.

Bei einer weiteren vorteilhaften Weiterbildung der Erfindung wird bei einem Übergang von der zweiten Betriebsart in die erste Betriebsart der Zündzeitpunkt bzw. der Zündwinkel vor dem Übergang nach spät verstellt.

Durch die erwähnte verzögernde Wirkung des Ansaugrohrs ist vor dem Übergang zu dem mageren Luft-/Kraftstoffgemisch bereits zu viel Luft in dem Brennraum vorhanden. Der daraus resultierende Momentenanstieg erfolgt somit unmittelbar vor dem Übergang in die erste Betriebsart. Durch die vor dem Übergang einsetzende Spätverstellung des Zündzeitpunkts bzw. Zündwinkels wird erreicht, daß die Kompenstaion des Momentenanstiegs zur richtigen Zeit erfolgt, nämlich unmittelbar bevor die Brennkraftmaschine in die zweite Betriebsart übergeht.

Bei einer vorteilhaften Ausgestaltung der Erfindung wird bei einem Übergang zwischen den beiden Betriebsarten die Kraftstoffmasse verringert.

Durch die Verringerung der Kräftstoffmasse kann eine Verringerung des erzeugten Drehmoments und damit eine Verringerung des Momentenanstiegs während des Übergangs zwischen der ersten und der zweiten Betriebsart erreicht werden. Damit ist es möglich, ein Ruckeln der Brennkraftmaschine gegebenenfalls vollständig oder zumindest teilweise durch diese Verringerung der Kraftstoffmasse zu verhindern. Es ist somit möglich, die erfindungsgemäße Spätverstellung des Zündzeitpunkts bzw. des Zündwinkels gegebenenfalls vollständig oder zumindest teilweise durch die Verringerung der Kraftstoffmasse zu ersetzen.

Vorzugsweise erfolgt die Verringerung der Kraftstoffmasse zusätzlich zu und etwa gleichzeitig mit der Spätverstellung des Zündzeitpunkts bzw. des Zündwinkels. Damit ist es nicht mehr erforderlich, den gesamten Momentenanstieg durch die Spätverstellung zu kompensieren, so daß im Vergleich zu einer Kompenstaion ohne eine Verringerung der Kraftstoffmasse eine geringere Spätverstellung ausreicht. Dies hat den Vorteil, daß ein Fehler bei der Berechnung der Spätverstellung des Zündzeitpunkts bzw. des Zündwinkels eine geringere Auswirkung auf den Wirkungsgrad der Verbrennung und damit auf die Kompensation des Momentenanstiegs hat.

Eine besonders vorteilhafte Ausgestaltung der Erfindung besteht darin, daß in der ersten Betriebsart der Kraftstoff während einer Verdichtungsphase direkt in den Brennraum der Brennkraftmaschine eingespritzt wird.

Dabei ist es des weiteren vorteilhaft, wenn in der zweiten Betriebsart der Kraftstoff während einer Ansaugphase direkt in den Brennraum eingespritzt wird.

Es handelt sich damit bei der genannten besonders vorteilhaften Ausgestaltung der Erfindung um eine sogenannte Benzin-Direkteinspritzung, bei der im Unterschied zur bisherigen Saugrohreinspritzung der Kraftstoff mittels jeweils eines Einspritzventils direkt in den Brennraum der Brennkraftmaschine eingespritzt wird. Zur Reduzierung des Kraftstoffverbrauchs und der Erzeugung von schadstoffhaltigen Abgasen wird dabei in der ersten Betriebsart ein mageres Luft-/Kraftstoffgemisch dadurch erreicht, daß der Kraftstoff in der Verdichtungsphase der Brennkraftmaschine in den Brennraum eingespritzt wird. Diese erste Betriebsart wird auch Schichtbetrieb oder Schichtladungsbetrieb genannt. In der zweiten Betriebsart wird - wie bei der Saugrohreinspritzung - der Kraftstoff während der Ansaugphase in den Brennraum eingespritzt. Es kann sich dabei um ein stöchiometrisches oder fettes Luft-/Kraftstoffgemisch handeln, mit dem insbesondere das erforderliche Drehmoment z.B. für eine Beschleunigung des Kraftfahrzeugs erzeugt wird. Diese zweite Betriebsart wird auch Homogenbetrieb genannt.

Bei der beschriebenen Benzin-Direkteinspritzung ist es besonders vorteilhaft, wenn insbesondere durch ein Steuergerät zwischen den beiden Betriebsarten umgeschaltet wird. Die Umschaltungen erfolgen dabei in Abhängigkeit von insbesondere dem Fahrerwunsch und den Betriebsgrößen bzw. Zustandsparametern der Brennkraftmaschine.

Durch die Anwendung der erfindungsgemäßen Spätverstellung des Zündzeitpunkts bzw. Zündwinkels auf die Benzin-Direkteinspritzung wird erreicht, daß bei den dort vorhandenen Umschaltungen von dem Schichtbetrieb in den Homogenbetrieb und umgekehrt kein Ruckeln oder zumindest nahezu kein Ruckeln vorhanden ist. Die Erfindung bewirkt somit eine verbesserte Laufruhe der Brennkraftmaschine und damit einen verbesserten Komfort für den Fahrer des Kraftfahrzeugs.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Anwendungsmöglichkeiten und Vorteile der Erfindung ergeben sich aus der nachfolgenden Beschreibung von Ausführungsbeispielen der Erfindung, die in den Figuren der Zeichnung dargestellt sind.
- Figur 1: zeigt ein schematisches Blockschaltbild eines Ausführungsbeispiels einer erfindungsgemäßen Brennkraftmaschine für ein Kraftfahrzeug, und
- Figur 2: zeigt ein schematisches Ablaufdiagramm eines Ausführungsbeispiels eines erfindungsgemäßen Verfahrens zum Betreiben der Brennkraftmaschine der Figur 1.

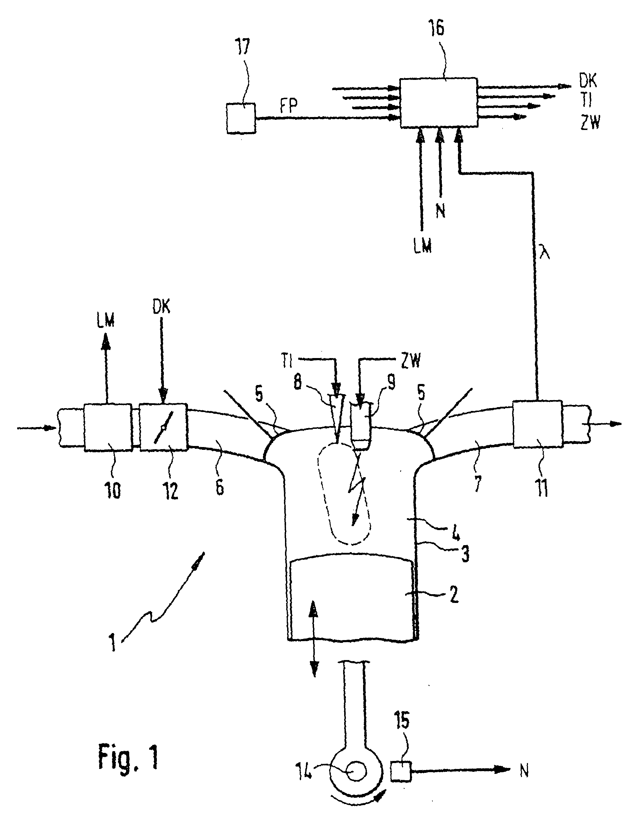

In der Figur 1 ist eine Brennkraftmaschine 1 mit Benzin-Direkteinspritzung dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des weiteren sind dem Brennraum 4 ein mit einem Signal TI ansteuerbares Einspritzventil 8 und eine mit einem Signal ZW ansteuerbare Zündkerze 9 zugeordnet.

Das Ansaugrohr 6 ist mit einem Luftmassensensor 10 und das Abgasrohr 7 ist mit einem Lambda-Sensor 11 versehen. Der Luftmassensensor 10 mißt die Luftmasse der dem Ansaugrohr 6 zugeführten Frischluft und erzeugt in Abhängigkeit davon ein Signal LM. Der Lambda-Sensor 11 mißt den Sauerstoffgehalt des Abgases in dem Abgasrohr 7 und erzeugt in Abhängigkeit davon ein Signal λ.

In dem Ansaugrohr 6 ist eine Drosselklappe 12 untergebracht, deren Drehstellung mittels eines Signals DK einstellbar ist.

In einer ersten Betriebsart, dem Schichtbetrieb der Brennkraftmaschine 1, wird die Drosselklappe 12 weit geöffnet. Der Kraftstoff wird von dem Einspritzventil 8 während einer durch den Kolben 2 hervorgerufenen Verdichtungsphase in den Brennraum 4 eingespritzt, und zwar örtlich in die unmittelbare Umgebung der Zündkerze 9 sowie zeitlich in einem geeigneten Abstand vor dem Zündzeitpunkt. Dann wird mit Hilfe der Zündkerze 9 der Kraftstoff entzündet, so daß der Kolben 2 in der nunmehr folgenden Arbeitsphase durch die Ausdehnung des entzündeten Kraftstoffs angetrieben wird.

In einer zweiten Betriebsart, dem Homogenbetrieb der Brennkraftmaschine 1, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff-/Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

Im Schichtbetrieb wie auch im Homogenbetrieb wird durch den angetriebenen Kolben eine Kurbelwelle 14 in eine Drehbewegung versetzt, über die letztendlich die Räder des Kraftfahrzeugs angetrieben werden. Der Kurbelwelle 14 ist ein Drehzahlsensor 15 zugeordnet, der in Abhängigkeit von der Drehbewegung der Kurbelwelle 14 ein Signal N erzeugt.

Die im Schichtbetrieb und im Homogenbetrieb von dem Einspritzventil 8 in den Brennraum 4 eingespritzte Kraftstoffmasse wird von einem Steuergerät 16 insbesondere im Hinblick auf einen geringen Kraftstoffverbrauch und/oder eine geringe Schadstoffentwicklung gesteuert und/oder geregelt. Zu diesem Zweck ist das Steuergerät 16 mit einem Rechengerät, insbesondere einem Mikroprozessor versehen, der in einem Steuerelement, insbesondere in einem Speicherbaustein, beispielsweise einem Read-Only-Memory ein Programm abgespeichert hat, das dazu geeignet ist, die genannte Steuerung und/oder Regelung durchzuführen.

Das Steuergerät 16 ist von Eingangssignalen beaufschlagt, die mittels Sensoren gemessene Betriebsgrößen der Brennkraftmaschine darstellen. Beispielsweise ist das Steuergerät 16 mit dem Luftmassensensor 10, dem Lambda-Sensor 11 und dem Drehzahlsensor 15 verbunden. Des weiteren ist das Steuergerät 16 mit einem Fahrpedalsensor 17 verbunden, der ein Signal FP erzeugt, das die Stellung eines von einem Fahrer betätigbaren Fahrpedals angibt. Das Steuergerät 16 erzeugt Ausgangssignale, mit denen über Aktoren das Verhalten der Brennkraftmaschine entsprechend der erwünschten Steuerung und/oder Regelung beeinflußt werden kann. Beispielsweise ist das Steuergerät 16 mit dem Einspritzventil 8, der Zündkerze 9 und der Drosselklappe 12 verbunden und erzeugt die zu deren Ansteuerung erforderlichen Signale TI, ZW und DK.

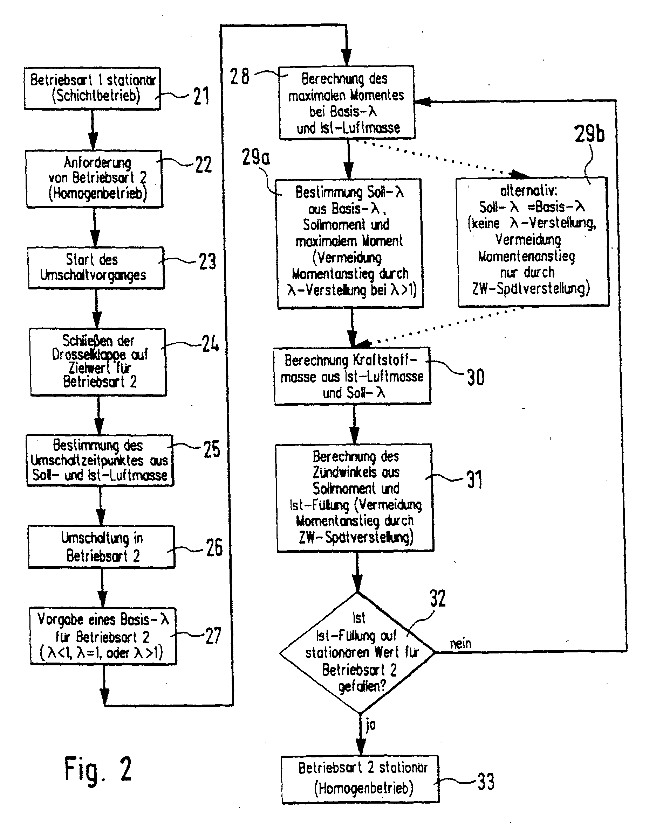

Von dem Steuergerät 16 wird das nachfolgend anhand der Figur 2 beschriebene Verfahren zum Umschalten von einem Schichtbetrieb in einen Homogenbetrieb durchgeführt. Die in der Figur 2 gezeigten Blöcke 21 bis 33 stellen dabei Funktionen des Verfahrens dar, die beispielsweise in der Form von Softwaremodulen oder dergleichen in dem Steuergerät 16 realisiert sind.

Gemäß dem Block 21 befindet sich die Brennkraftmaschine 1 stationär in der ersten Betriebsart, also dem Schichtbetrieb, in dem ein mageres Luft-/Kraftstoffgemisch in den Brennraum 4 eingespritzt wird.

Beispielsweise aufgrund einer von dem Fahrer des Kraftfahrzeugs erwünschten Beschleunigung erfolgt in dem Block 22 eine Anforderung der zweiten Betriebsart, also dem Homogenbetrieb, in dem ein stöchiometrisches oder fettes Luft-/Kraftstoffgemisch in den Brennraum 4 eingespritzt wird. In dem Block 23 wird die Umschaltung von der ersten Betriebsart in die zweite Betriebsart, also von dem Schichtbetrieb in den Homogenbetrieb gestartet.

Zuerst wird in dem Block 24 die Drosselklappe 12 geschlossen. Dies wird von dem Steuergerät 16 durch die Erzeugung eines entsprechenden Signals DK erreicht, mit dem die Drosselklappe 12 auf eine Drehstellung eingestellt wird, die dem Zielwert für den angeforderten Homogenbetrieb entspricht. Der Zielwert wird dabei von dem Steuergerät 16 in Abhängigkeit von den Betriebsgrößen der Brennkraftmaschine 1 berechnet, z.B. in Abhängigkeit von der Drehzahl N, der Stellung des Fahrpedals FP, und dergleichen.

Aufgrund der Speicherwirkung des zwischen der Drosselklappe 12 und dem Brennraum 4 angeordneten Ansaugrohrs 6 wird die dem Brennraum 4 zugeführte Luftmasse nicht sofort vermindert, sondern nimmt während einer Zeitverzögerung langsam ab. Einen Teil dieser Zeitverzögerung wird die Brennkraftmaschine 1 weiterhin in der ersten Betriebsart, also im Schichtbetrieb betrieben. Danach wird in den Homogenbetrieb umgeschaltet. Dabei wird jedoch nicht gewartet, bis die Zeitverzögerung vollständig abgelaufen ist, also bis die für den angeforderten Homogenbetrieb erforderliche Luftmasse dem Brennraum 4 zugeführt wird, sondern es wird bereits früher in den Homogenbetrieb umgeschaltet.

Im Block 25 wird von dem Steuergerät 16 derjenige Zeitpunkt berechnet, in dem die tatsächliche Umschaltung von der ersten in die zweite Betriebsart, also vom Schicht- in den Homogenbetrieb erfolgen soll. Dieser Zeitpunkt wird auf der Grundlage der für den angeforderten Homogenbetrieb erforderlichen Soll-Luftmasse und der aktuell gemessenen Ist-Luftmasse ermittelt. Die Ist-Luftmasse wird von dem Steuergerät 16 aus dem Signal LM abgeleitet.

In dem im Block 25 errechneten Umschaltzeitpunkt schaltet dann das Steuergerät 16 gemäß dem Block 26 von der ersten Betriebsart, dem Schichtbetrieb, in die zweite Betriebsart, den Homogenbetrieb, um.

Im Block 27 wird von dem Steuergerät 16 ein Basis-λ für den Homogenbetrieb vorgegeben, das auf der Grundlage der Betriebsgrößen der Brennkraftmaschine 1 berechnet wird. Das Basis-λ kann dabei gleich, größer oder kleiner als 1 sein.

Aus dem Basis-λ und der Ist-Luftmasse berechnet das Steuergerät 16 im Block 28 ein daraus resultierendes maximales Moment der Brennkraftmaschine 1. Die Ist-Luftmasse wird dabei wieder von dem Steuergerät 16 aus dem Signal LM errechnet. Da die Ist-Luftmasse aufgrund der Speicherwirkung des Ansaugrohrs 6 - wie erläutert - unmittelbar nach dem Umschaltzeitpunkt an sich zu groß ist, ist das aus dieser Ist-Luftmasse resultierende maximale Moment ebenfalls zu groß für den angeforderten Homogenbetrieb.

Nunmehr wird in dem Block 29a von dem Steuergerät 16 ein Soll-Moment berechnet, das in der zweiten Betriebsart, also im Homogenbetrieb an sich vorhanden sein soll. Dieses Soll-Moment ist kleiner als das maximale Moment. Aus dem Soll-Moment, aus dem maximalen Moment und aus dem Basis-λ ermittelt das Steuergerät 16 dann ein Soll-λ, bei dem es sich um dasjenige λ handelt, das erforderlich ist, um im Homogenbetrieb das errechnete Soll-Moment zu erreichen.

Das maximale Moment ist - wie erwähnt - an sich zu groß für den angeforderten Homogenbetrieb. Dies hätte zur Folge, daß die Brennkraftmaschine 1 einem Momentenanstieg und damit einem Ruckeln ausgesetzt wäre. Bei dem Soll-Moment handelt es sich um das an sich erforderliche Moment für den angeforderten Homogenbetrieb. Bei dem Soll-Moment tritt also kein Ruckeln oder dergleichen auf. Durch die Berechnung des Soll-Moments ist also dasjenige Moment bekannt, mit dem ein ruckfreier Übergang von der ersten Betriebsart, dem Schichtbetrieb, in die zweite Betriebsart, den Homogenbetrieb möglich ist.

Im Block 30 berechnet das Steuergerät 16 die einzuspritzende Kraftstoffmasse aus dem ermittelten Soll-λ und der gemessenen Ist-Luftmasse. Diese einzuspritzende Kraftstoffmasse wird von dem Steuergerät 16 über das Signal TI und das Einspritzventil 8 in den Brennraum 4 eingespritzt.

Danach wird im Block 31 die Ist-Füllung in dem Brennraum 4 durch das Steuergerät 16 berechnet. Bei der Ist-Füllung handelt es sich um dasjenige Luft-/Kraftstoffgemisch, das aktuell dem Brennraum 4 zugeführt wird. Die Ist-Füllung ergibt sich aus Modellberechnungen auf der Grundlage der Betriebsgrößen der Brennkraftmaschine 1. Alternativ oder additiv ist es möglich, die Ist-Füllung mit Hilfe eines Drucksensors im Ansaugrohr 6 zu ermitteln.

Aus der Ist-Füllung und dem erwähnten Soll-Moment berechnet dann das Steuergerät im Block 31 den Zündwinkel ZW bzw. einen Zündzeitpunkt. Diese Berechnung ist dabei darauf ausgerichtet, den Zündwinkel ZW bzw. den Zündzeitpunkt derart zu wählen, daß sich aus der Ist-Füllung das Soll-Moment ergibt.

Da die Ist-Füllung aufgrund der bereits erwähnten Speicherwirkung des Ansaugrohrs 6 zumindest unmittelbar nach dem Umschaltzeitpunkt noch zu groß ist, würde dies bei einer Entzündung des Luft-/Kraftstoffgemischs entsprechend dem Homogenbetrieb ein zu großes Drehmoment und damit den erwähnten Momentenanstieg bewirken. Das Steuergerät 16 verstellt deshalb den Zündzeitpunkt bzw. den Zündwinkel ZW derart, daß der Wirkungsgrad der Verbrennung verschlechtert wird. Dies wird durch eine Spätverstellung des Zündwinkels ZW bzw. des Zündzeitpunkts erreicht. Die Brennkraftmaschine 1 erzeugt daraufhin ein geringeres Moment, so daß der Momentenanstieg ganz oder zumindest teilweise kompensiert und damit vermieden wird. Durch die Verstellung des Zündwinkels ZW bzw. des Zündzeitpunkts nach spät wird somit ein ruckfreier Übergang vom Schichtbetrieb in den Homogenbetrieb, also von der ersten in die zweite Betriebsart erreicht.

Im Block 32 wird nunmehr von dem Steuergerät 16 geprüft, ob die Ist-Füllung in dem Brennraum 4 auf den für den angeforderten Homogenbetrieb erforderlichen Wert gefallen ist. Es wird also geprüft, ob die dem Brennraum 4 zugeführte Luftmasse auf denjenigen Wert gefallen ist, der für die Durchführung des erwünschten Homogenbetriebs erforderlich ist.

Ist dies nicht der Fall, so wird das Verfahren von dem Steuergerät 16 mit dem Block 28 fortgesetzt. Es werden also auf der Grundlage der nunmehr vorliegenden Betriebsgrößen der Brennkraftmaschine 1 das maximale Moment, das Soll-λ, die Kraftstoffmasse und der Zündwinkel ZW erneut berechnet. Dies führt erneut zu einer Spätverstellung des Zündzeitpunkts bzw. des Zündwinkels ZW, so daß weiterhin ein Momentenanstieg und damit ein Ruckeln vermieden wird.

Dieses Verfahren wird solange fortgesetzt, bis die Ist-Füllung auf denjenigen Wert gefallen ist, der für die zweite Betriebsart, also den Homogenbetrieb erforderlich ist. Dies ist etwa nach der durch die Speicherwirkung des Ansaugrohrs 6 erzeugten Zeitverzögerung der Fall. Dann wird zum Block 33 übergegangen, in dem die Brennkraftmaschine 1 von dem Steuergerät 16 stationär im Homogenbetrieb betrieben wird.

Alternativ ist es möglich, anstelle des Blocks 29a den Block 29b auszuführen.

Bei dieser Alternative wird das Soll-λ immer dem Basis-λ gleichgesetzt. Damit erfolgt im Unterschied zum Block 29a keine Neuberechnung des λ auf der Grundlage des Soll-Moments und des maximalen Moments, sondern das λ wird während des gesamten Verfahrens, also während des Umschaltens konstant gehalten und damit nicht verstellt.

In diesem Fall wird die gesamte Kompensation des erwähnten Momentenanstiegs allein durch die Spätverstellung des Zündwinkels- ZW bzw. des Zündzeitpunkts auf die beschriebene Art und Weise erreicht.

Bei einem Umschalten von der zweiten Betriebsart, also von einem Homogenbetrieb, zu der ersten Betriebsart, also in einen Schichtbetrieb, wird von dem Steuergerät 16 zuerst die Drosselklappe 12 geöffnet, so daß mehr Luftmasse in den Brennraum 4 gelangt. Auch hier ist jedoch aufgrund des Ansaugrohrs 6 eine Zeitverzögerung vorhanden, bis die für die zweite Betriebsart erforderliche, vermehrte Luftmasse in den Brennraum 4 gelangt. Während dieser Zeitverzögerung ist für die erste Betriebsart zu viel Luftmasse vorhanden, was sich in einem Momentenanstieg, also in einem Ruckeln bemerkbar machen würde.

Durch die erwähnte verzögernde Wirkung des Ansaugrohrs 6 ist dabei vor dem tatsächlichen Umschalten in den Schichtbetrieb bereits zu viel Luftmasse in dem Brennraum 4 vorhanden. Dies bedeutet, daß der Homogenbetrieb bereits mit zu viel Luftmasse versorgt wird. Der daraus resultierende Momentenanstieg erfolgt somit unmittelbar vor dem Umschalten in die erste Betriebsart. Die beschriebene Spätverstellung des Zündwinkels ZW bzw. des Zündzeitpunkts erfolgt deshalb unmittelbar vor dem Umschalten von dem Homogenbetrieb in den Schichtbetrieb. Durch die vor dem Umschalten einsetzende Spätverstellung des Zündzeitpunkts bzw. Zündwinkels ZW wird erreicht, daß der Wirkungsgrad der Verbrennung verschlechtert wird, so daß das Ruckeln zumindest teilweise oder gar vollständig abgebaut wird.

## Patentansprüche

1. Verfahren zum Betreiben einer Brennkraftmaschine (1) insbesondere eines Kraftfahrzeugs, bei dem einem Brennraum (4) in einer ersten Betriebsart ein mageres Luft-/Kraftstoffgemisch und in einer zweiten Betriebsart ein stöchiometrisches oder ein fettes Luft-/Kraftstoffgemisch zugeführt wird, bei dem das zugeführte Luft-/Kraftstoffgemisch in dem Brennraum (4) entzündet wird, und bei dem bei einem Übergang von der ersten Betriebsart in die zweite Betriebsart der Zündzeitpunkt bzw. der Zündwinkel (ZW) für die Entzündung des Luft-/Kraftstoffgemischs nach spät verstellt wird, **dadurch gekennzeichnet, dass** die Spätverstellung (31) des Zündzeitpunkts bzw. des Zündwinkels (ZW) aus dem aktuell dem Brennraum (4) zugeführten Luft-/Kraftstoffgemisch und dem für einen ruckfreien Übergang erforderlichen Soll-Moment ermittelt wird.

2. Verfahren nach Anspruch 1, **dadurch gekennzeichnet, dass** bei einem Übergang von der ersten Betriebsart in die zweite Betriebsart die dem Brennraum (4) zugeführte Luftmasse verringert wird.

3. Verfahren nach einem der Ansprüche 1 oder 2, **dadurch gekennzeichnet, dass** bei einem Übergang von der ersten Betriebsart in die zweite Betriebsart der Zündzeitpunkt bzw. der Zündwinkel (ZW) nach dem Übergang nach spät verstellt wird.

4. Verfahren zum Betreiben einer Brennkraftmaschine (1) insbesondere eines Kraftfahrzeugs, bei dem einem Brennraum (4) in einer ersten Betriebsart ein mageres Luft-/Kraftstoffgemisch und in einer zweiten Betriebsart ein stöchiometrisches oder ein fettes Luft-/Kraftstoffgemisch zugeführt wird, bei dem das zugeführte Luft-/Kraftstoffgemisch in dem Brennraum (4) entzündet wird, und bei dem bei einem Übergang von der zweiten Betriebsart in die erste Betriebsart der Zündzeitpunkt bzw. der Zündwinkel (ZW) für die Entzündung des Luft-/Kraftstoffgemischs nach spät verstellt wird, **dadurch gekennzeichnet, dass** die Spätverstellung des Zündzeitpunkts bzw. des Zündwinkels (ZW) aus dem aktuell dem Brennraum (4) zugeführten Luft-/Kraftstoffgemisch und dem für einen ruckfreien Übergang erforderlichen Soll-Moment ermittelt wird.

5. Verfahren nach Anspruch 4, **dadurch gekennzeichnet, dass** bei einem Übergang von der zweiten Betriebsart in die erste Betriebsart die dem Brennraum (4) zugeführte Luftmasse vergrößert wird.

6. Verfahren nach einem der Ansprüche 4 oder 5, **dadurch gekennzeichnet, dass** bei einem Übergang von der zweiten Betriebsart in die erste Betriebsart der Zündzeitpunkt bzw. der Zündwinkel (ZW) vor dem Übergang nach spät verstellt wird.

7. Verfahren nach einem der Ansprüche 1 bis 6, **dadurch gekennzeichnet, dass** bei einem Übergang zwischen den beiden Betriebsarten die Kraftstoffmasse verringert wird.

8. Verfahren nach Anspruch 7, **dadurch gekennzeichnet, dass** die Verringerung der Kraftstoffmasse zusätzlich zu und etwa gleichzeitig mit der Spätverstellung des Zündzeitpunkts bzw. des Zündwinkels (ZW) erfolgt.

9. Verfahren nach einem der Ansprüche 1 bis 8, **dadurch gekennzeichnet, dass** in der ersten Betriebsart der Kraftstoff während einer Verdichtungsphase direkt in den Brennraum (4) der Brennkraftmaschine (1) eingespritzt wird.

10. Verfahren nach Anspruch 9, **dadurch gekennzeichnet, dass** in der zweiten Betriebsart der Kraftstoff während einer Ansaugphase direkt in den Brennraum (4) eingespritzt wird.

11. Verfahren nach einem der Ansprüche 9 oder 10, **dadurch gekennzeichnet, dass** zwischen den beiden Betriebsarten umgeschaltet wird.

12. Elektrisches Speichermedium für ein Steuergerät (16) einer Brennkraftmaschine (1), wobei auf dem Speichermedium ein Programm gespeichert ist, zur Anwendung in einem Verfahren nach einem der Ansprüche 1 bis 11.

13. Steuergerät (16) für eine Brennkraftmaschine (1) programmiert zur Anwendung in einem Verfahren nach einem der Ansprüche 1 bis 11.

14. Brennkraftmaschine (1) insbesondere für ein Kraftfahrzeug, mit einem Brennraum (4), einer Zündkerze (9) und einem Steuergerät (16), des zur Anwendung in einem Verfahren nach einem der Ansprüche 1 bis 11 programmiert ist.

## Claims

1. Method for operating an internal combustion engine (1) in particular of a motor vehicle, in which in a first operating mode a lean air/fuel mix is fed to a combustion chamber (4) and in a second operating mode a stoichiometric or rich air/fuel mix is fed to the combustion chamber, in which the air/fuel mix supplied is ignited in the combustion chamber (4), and in which in the event of a transition from the first operating mode to the second operating mode the ignition time or the ignition angle (ZW) for the ignition of the air/fuel mix is adjusted towards a late position, **characterized in that** the adjustment (31) of the ignition time or the ignition angle (ZW) towards a late position (31) is determined from the air/fuel mix which is at the time being fed to the combustion chamber (4) and the desired torque which is required for a smooth transition.

2. Method according to Claim 1, **characterized in that** in the event of a transition from the first operating mode to the second operating mode the air mass fed to the combustion chamber (4) is reduced.

3. Method according to either of Claims 1 and 2, **characterized in that** in the event of a transition from the first operating mode to the second operating mode the ignition time or the ignition angle (ZW) is adjusted towards a late position following the transition.

4. Method for operating an internal combustion engine (1) in particular of a motor vehicle, in which in a first operating mode a lean air/fuel mix is fed to a combustion chamber (4) and in a second operating mode a stoichiometric or rich air/fuel mix is fed to the combustion chamber, in which the air/fuel mix supplied is ignited in the combustion chamber (4), and in which in the event of a transition from the second operating mode to the first operating mode the ignition time or the ignition angle (ZW) for the ignition of the air/fuel mix is adjusted towards a late position, **characterized in that** the adjustment of the ignition time or the ignition angle (ZW) towards a late position is determined from the air/fuel mix which is at the time being fed to the combustion chamber (4) and the desired torque which is required for a smooth transition.

5. Method according to Claim 4, **characterized in that** in the event of a transition from the second operating mode to the first operating mode, the mass of air fed to the combustion chamber (4) is increased.

6. Method according to one of Claims 4 or 5, **characterized in that** in the event of a transition from the second operating mode to the first operating mode the ignition time or the ignition angle (ZW) is adjusted to a late position prior to the transition.

7. Method according to one of Claims 1 to 6, **characterized in that** in the event of a transition between the two operating modes the fuel mass is reduced.

8. Method according to Claim 7, **characterized in that** the reduction in the fuel mass takes place in addition to and approximately simultaneously with the adjustment of the ignition time or the ignition angle (ZW) to a late position.

9. Method according to one of Claims 1 to 8, **characterized in that** in the first operating mode the fuel is injected directly into the combustion chamber (4) of the internal combustion engine (1) during a compression phase.

10. Method according to Claim 9, **characterized in that** in the second operating mode the fuel is injected directly into the combustion chamber (4) during an induction phase.

11. Method according to one of Claims 9 or 10, **characterized in that** the engine is switched between the two operating modes.

12. Electrical memory medium for a control unit (16) of an internal combustion engine (1), in which a program is stored on the memory medium, for use in a method according to one of Claims 1 to 11.

13. Control unit (16) for an internal combustion engine (1) which is programmed for use in a method according to one of Claims 1 to 11.

14. Internal combustion engine (1) in particular for a motor vehicle, having a combustion chamber (4), a spark plug (9) and a control unit (16) which is programmed for use in a method according to one of Claims 1 to 11.

## Revendications

1. Procédé de fonctionnement d'un moteur à combustion interne (1), en particulier d'un véhicule automobile, dans lequel, dans un premier mode de fonctionnement, un mélange air-carburant pauvre est introduit dans la chambre de combustion (4) et, dans un deuxième mode de fonctionnement, un mélange air-carburant stoechiométrique ou riche est introduit dans la chambre de combustion (4), le mélange air-carburant introduit dans la chambre de combustion (4) s'allume et, si l'on passe du premier mode de fonctionnement au deuxième mode de fonctionnement, le point d'allumage ou l'angle de came (ZW) est réglé en retard pour l'allumage du mélange air-carburant,
**caractérisé en ce que**
le réglage tardif (31) du point d'allumage ou de l'angle de came (ZW) est déterminé à partir du mélange air-carburant actuel introduit dans la chambre de combustion (4) et à partir du couple de consigne nécessaire pour un passage sans à-coups.

2. Procédé selon la revendication 1,
**caractérisé en ce que**
si l'on passe du premier mode de fonctionnement au deuxième mode de fonctionnement, la masse d'air introduite dans la chambre de combustion (4) diminue.

3. Procédé selon l'une quelconque des revendications 1 ou 2,
**caractérisé en ce que**
si l'on passe du premier mode de fonctionnement au deuxième mode de fonctionnement, le point d'allumage ou l'angle de came (ZW) est réglé en retard après le passage.

4. Procédé de fonctionnement d'un moteur à combustion interne (1), en particulier d'un véhicule automobile dans lequel dans un premier mode de fonctionnement, un mélange air-carburant pauvre est introduit dans la chambre de combustion (4) et, dans un deuxième mode de fonctionnement, un mélange air-carburant stoechiométrique ou riche est introduit dans la chambre de combustion (4), le mélange air-carburant introduit dans la chambre de combustion (4) s'allume et si l'on passe du deuxième mode de fonctionnement au premier mode de fonctionnement, le point d'allumage ou l'angle de came (ZW) est réglé en retard pour l'allumage du mélange air-carburant,
**caractérisé en ce que**
le réglage tardif (31) du point d'allumage ou de l'angle de came (ZW) est déterminé à partir du mélange air-carburant actuel introduit dans la chambre de combustion (4) et à partir du couple de consigne nécessaire pour un passage sans à-coups.

5. Procédé selon la revendication 4,
**caractérisé en ce que**
si l'on passe du deuxième mode de fonctionnement au premier mode de fonctionnement, la masse d'air introduite dans la chambre de combustion (4) augmente.

6. Procédé selon l'une quelconque des revendications 4 ou 5,
**caractérisé en ce que**
si l'on passe du deuxième mode de fonctionnement au premier mode de fonctionnement, le point d'allumage ou l'angle de came (ZW) est réglé en retard avant le passage.

7. Procédé selon l'une quelconque des revendications 1 à 6,
**caractérisé en ce que**
si l'on passe d'un mode de fonctionnement à l'autre, la masse de carburant diminue.

8. Procédé selon la revendication 7,
**caractérisé en ce que**
la diminution de la masse de carburant s'effectue en plus de et à peu près simultanément au réglage tardif du point d'allumage ou de l'angle de came (ZW).

9. Procédé selon l'une quelconque des revendications 1 à 8,
**caractérisé en ce qu'**
au cours du premier mode de fonctionnement, le carburant est directement injecté dans la chambre de combustion (4) du moteur à combustion interne (1) au cours d'une phase de compression.

10. Procédé selon la revendication 9,
**caractérisé en ce qu'**
au cours du deuxième mode de fonctionnement, le carburant est directement injecté dans la chambre de combustion (4) au cours d'une phase d'aspiration.

11. Procédé selon l'une quelconque des revendications 9 ou 10,
**caractérisé en ce que**
l'on passe d'un mode de fonctionnement à l'autre.

12. Support d'enregistrement électrique pour un appareil de commande (16) pour un moteur à combustion interne (1), un programme étant stocké dans la mémoire du support d'enregistrement pour une application dans un procédé selon l'une quelconque des revendications 1 à 11.

13. Appareil de commande (16) pour un moteur à combustion interne (1) programmé pour une application dans un procédé selon l'une quelconque des revendications 1 à 11.

14. Moteur à combustion interne (1), en particulier pour un véhicule automobile, équipé d'une chambre de combustion (4), d'une bougie d'allumage (9) et d'un appareil de commande (16), programmé pour une application dans un procédé selon l'une quelconque des revendications 1 à 11.
